# EUROPÄISCHE PATENTSCHRIFT

(11) **EP 0 638 489 B1**
(45) Veröffentlichungstag und Bekanntmachung des Hinweises auf die Patenterteilung: **07.01.1999**
(21) Anmeldenummer: 94111764.0
(22) Anmeldetag: 28.07.1994
(51) Int. Cl.: B65D 90/30

(54) **Rückhaltesystem zur Verhinderung des Austritts von Stoffen aus Anlagen in die Umgebung**
Restraint system for preventing the escape of material from a plant to the surroundings
Système de retenue pour empêcher la sortie de produits d'une installation dans l'environnement

(30) Priorität: 11.08.1993 DE 4326888
(43) Veröffentlichungstag der Anmeldung: 15.02.1995
(73) Patentinhaber: HOECHST AKTIENGESELLSCHAFT, 65929 Frankfurt am Main (DE)
(72) Erfinder: Alberti, Klaus, Dr., D-65510 Idstein (DE); Ritter, Eberhard, Dr., D-64546 Mörfelden (DE); Westphal, Frank, Dr., D-65929 Frankfurt (DE); Wehmeier, Guido, Dr., D-65812 Bad Soden (DE)

(56) Entgegenhaltungen:
- BE-A- 898 914
- DE-A- 1 921 512
- DE-A- 4 015 354
- DE-C- 460 981
- US-A- 3 276 620

## Beschreibung

Die vorliegende Erfindung betrifft den Einsatz flexibler Behälter in Sicherheitssystemen zum Auffangen von Stoffen aus Anlagen, um den Austritts von Stoffen aus Anlagen in die Umgebung zu verhindern.

Beim Betrieb von Anlagen, in denen infolge von Störungen unkontrollierte chemische Reaktionen oder übermäßige Wärmeentwicklungen ablaufen, kann es zu einem ungewollten Anstieg des Innendruckes kommen. Als Folge solcher Störungen kann es zu einem ungewollten Austritt von Stoffen in die Umgebung kommen.

Bei solchen Anlagen ist es allgemein üblich, Druckentlastungseinrichtungen bzw. Überlaufeinrichtungen vorzusehen. Beispiele dafür sind Ableiteinrichtungen, die mit Sicherheitsventilen oder Berstscheiben ausgerüstet sind. Nachteile sind im Falle des freien Austretens von Stoffen insbesondere in einer möglichen Gefährdung von Personen und der Umgebung zu sehen. Die Beseitigung der ausgetretenen Stoffe kann ferner sehr zeit- und/oder kostenintensiv sein.

Es ist bereits bekannt, solche Ableiteinrichtungen mit Auffangbehältern zu versehen, die zum Teil druckbeständig ausgestaltet sind. Bei den bekannten Sicherheitssystemen kommen üblicherweise starre Auffangbehälter zum Einsatz. Nachteilig wirkt sich bei diesen Behältern insbesondere ihr hoher Platzbedarf aus. Dies erschwert ein Nachrüsten von bestehenden Anlagen mit solchen Vorrichtungen.

Ein weiterer Nachteil von bekannten starren Auffangbehältern ist in deren hohem Gewicht zu sehen. Dies erschwert oder verunmöglicht zum Teil das Nachrüsten von bereits bestehenden Anlagen, da ein Aufstellen auf Gebäudedächern aus Gründen der Statik häufig nicht möglich ist.

Es ist auch bereits versucht worden, flexible Auffangbehälter einzusetzen. Nachteilig bei diesen vorbekannten Auffangbehältern ist, daß diese im Störfall erst durch vorbereitende Maßnahmen, wie durch Aufrollen, Entfalten oder Anschließen, betriebsbereit gemacht werden müssen. Diese Behälter dienen auch lediglich zum Auffangen von Stoffen, die drucklos aus havarierten Anlagen auslaufen. Derartige Behälter sind beispielsweise beschrieben in der US-A-4,622,027, der US-A-3,276,620 und der DE-C-460 981.

Es besteht weiterhin ein Bedarf nach einer Verbesserung der Sicherheitssysteme von Anlagen, bei denen ungewollt Stoffe in die Umgebung austreten können. Insbesondere besteht ein Bedarf nach Sicherheitssystemen, mit denen bestehende Anlagen auf einfache Art und Weise nachgerüstet werden können und die im Störfall ohne weitere Vorbereitungen zur Anwendung kommen.

Die vorliegende Erfindung betrifft ein Rückhaltesystem zum Auffangen von Stoffen aus einem Apparat, dessen Innendruck mindestens 0,5 bar über dem Außendruck liegt, der mindestens eine in mindestens einen flexiblen Behälter mündende und mit diesem verbundene Abführleitung aufweist sowie eine Druckentlastungssicherung, wobei Druckentlastungssicherung, Abführleitung und der mindestens eine flexible Behälter so angeordnet sind, daß bei Ansprechen der Druckentlastungssicherung aus dem Apparat austretende Stoffe in den mindestens einen flexiblen Behälter gelangen, wobei der mindestens eine flexible Behälter mindestens so dimensioniert ist, daß sein Innenvolumen die aus dem Apparat ausgetretene Stoffmenge vollständig aufnehmen kann, ohne daß dadurch ein Innendruck entsteht, der mehr als 3 bar über dem Außendruck liegt, und wobei an der Mündung der Abführleitung in den mindestens einen flexiblen Behälter und/oder in dem mindestens einen flexiblen Behälter eine Vorrichtung zum Verteilen der Stoffströme angeordnet ist.

Bei der mit den flexiblen Behältern auszurüstenden Anlage kann es sich um ganze Anlagenkomplexe oder auch um Anlagenteile handeln, bei denen sich als Folge von Störungen bei Verfahrensabläufen innerhalb der Anlage ein Druck aufbauen kann, der einen vorgegebenen Grenzwert überschreitet und der zu einem ungewünschten Austritt von Stoffen, wie Gasen und/oder Flüssigkeiten und/oder Feststoffen in die Umgebung führen kann. Diese Verfahrensabläufe werden im Normalfall drucklos oder unter Über- oder Unterdruck durchgeführt. Bei den Verfahrensabläufen kann es sich um chemische Reaktionen handeln; es kann sich aber auch um andere, nicht mit chemischen Umsetzungen verbundende Operationen handeln, wie beispielsweise um Trennoperationen, wie Rektifikationen, oder um Reinigungsoperationen, wie Wäschen, in deren Verlauf sich ein ungewünschter Druckaufbau ergeben kann, oder um die Lagerung von Stoffen in Hochbehältern (Silos), worin sich ein hoher statischer Druck aufbauen kann.

Insbesondere handelt es sich bei den Anlagen um Reaktoren, wie Reaktionskessel oder Strömungsreaktoren, in denen chemische Umsetzungen durchgeführt werden, oder um Kolonnen, Fördereinrichtungen, Lagertanks oder andere unter Druck stehende Anlagen oder Apparate.

Bei den aus der Anlage abzuführenden Stoffen handelt es sich üblicherweise um Gemische von kondensierbaren und/oder nichtkondensierbaren Gasen und Flüssigkeiten, die bei möglichen Störfällen aus diesen Anlagen entweichen können. Die Stoffe können auch Feststoffe enthalten oder als Dämpfe entweichen.

Bei der Abführleitung handelt es sich um eine an sich übliche Vorrichtung, die zur Druckentlastung und zum Abführen von Stoffen aus der Anlage vorgesehen ist. Diese Abführleitung ist mit einer an sich üblichen Druckentlastungssicherung ausgestattet, wie mit einem Sicherheitsventil oder mit einer Berstscheibe.

Die in den flexiblen Behälter mündende Abführleitung ist mit diesem im wesentlichen druckdicht verbunden. Darunter ist eine Verbindung zu verstehen, die den im System, welches Anlage, Abführleitung und Behälter umfaßt, auftretenden Drucken standhält, insbesondere den Drucken, die im Störfalle an der Verbindung auftreten können. Bei der Verbindung handelt es sich um eine apparative Vorrichtung, mit der der flexible Behälter sicher und abrutschfest an die Abführleitung angebracht werden kann. Die Geometrie der Abführleitung muß nicht speziell für den flexiblen Behälter modifiziert werden. Bei der Verbindung handelt es sich beispielsweise um eine Flansch-verbindung. Im Behälter kann die Abführleitung in Form von Prallblechen oder Zersieber/Zerstäuber-Einrichtungen ausgeführt werden, um punktförmige Belastungen zu vermeiden.

Der erfindungsgemäß eingesetzte flexible Behälter ist mindestens so zu dimensionieren, daß das Innenvolumen des flexiblen Behälters die ausgetretene Stoffmenge vollständig aufnimmt, ohne daß sich ein nennenswerter Innendruck aufbaut.

Die Behälter sind gleichwohl derart ausgelegt, daß sie zumindest auch einem leichtem Überdruck standhalten können.

Das verbundene System aus Abführleitung und flexiblem Behälter ist so vorzugeben, daß der Innendruck im System nach einem möglichen Störfall praktisch dem Außendruck entspricht. Darunter ist zu verstehen, daß der Innendruck nicht nennenswert über dem Außendruck liegt, beispielsweise bis zu ein bis drei bar, vorzugsweise bis zu ein bis zwei bar, über diesem liegt, bzw. dem Außendruck entspricht.

Zwischen der Abführleitung und dem flexiblen Behälter können zweckmäßigerweise noch andere Vorrichtungen zwischengeschaltet werden, wie Vorrichtungen zum Abscheiden von Flüssigkeiten und/oder Feststoffen oder zum Auskondensierenvon Dämpfen.

Der flexible Behälter kann aus einem beliebigen Material bestehen und ein beliebiges Innenvolumen aufweisen, solange dieser dazu in der Lage ist, den im System auftretenden Drucken zu widerstehen und widerstandsfähig gegenüber den aufzunehmenden Stoffen zu sein.

Vorzugsweise besteht der flexible Behälter aus einem beschichteten oder unbeschichteten Gewebe.

Der flexible Behälter weist vorzugsweise ein Volumen von 0,1 bis 1000 m³ auf und enthält insbesondere hochfestes Gewebe. Reicht das Volumen eines Behälters allein nicht aus, so können auch mehrere Behälter zusammengeschaltet werden, beispielsweise durch Schläuche und/oder Rohre mit oder ohne Druckentlastungssicherungen, wie Berstscheiben, die vorzugsweise geringe Ansprechdrucke, beispielsweise von etwa 0,5 bar, aufweisen.

Bei dem hochfesten Gewebe kann es sich um ein Material auf der Basis von Naturfasern oder insbesondere Chemiefasern handeln. Beispiele dafür sind Fasern aus Polykondensaten, wie Polyamiden, inbesondere von aromatischen Polyamiden, von Polyestern, insbesondere von Polyethylenterephthalat oder dessen Copolyestern, oder von Polyharnststoffen; Fasern aus Polymerisaten, wie Polyethylen, Polypropylen, Polyvinylchlorid, Polyfluorethylen, Polyacrylnitril; Fasern aus Polyaddukten, wie Polyurethan; oder Fasern aus anorganischen Rohstoffen, wie Glas-, Metall- oder Kohlenstofffasern.

Ferner kann es sich auch um Mischgewebe aus den genannten Fasermaterialien handeln.

Die Gewebe weisen eine - für den ins Auge gefaßten Anwendungszweck ausreichende - geringe Gas- und Flüssigkeitsdurchlässigkeit auf und können durch Vernähen oder Verschweißen zusammengefügt sein.

Die Gewebe können außerdem zur Verbesserung der Beständigkeit gegenüber Umwelteinflüssen oder betriebsbedingten Belastungen, wie Chemikalienbeständigkeit, Licht- und UV-Beständigkeit, Hitze- und Kältebeständigkeit, Reißfestigkeit, oder der Verarbeitbarkeit ein- oder doppelseitig beschichtet sein.

Bevorzugte Beschichtungsmittel dienen der Verbesserung der Undurchlässigkeit und/oder der Temperatur- und Chemikalienbeständigkeit des flexiblen Behälters für die aufzunehmenden Stoffe; dabei handelt es sich vorzugsweise um thermoplastische Kunststoffe, wie PVC, insbesondere um Weich-PVC oder Polyurethan, oder um Polyolefine, wie das Produkt ^{R}PERL der Firma Van Besouw; oder um Elastomere, insbesondere um Synthese- oder Naturkautschuk, Isopren, Neopren oder Silicon.

Der flexible Behälter wird so ausgewählt, daß er in einem weiten Temperaturbereich eingesetzt werden kann, beispielsweise bei Temperaturen von -40 bis + 300°C, vorzugsweise im Temperaturbereich von -30 bis +200°C.

Der flexible Behälter kann beliebige, dem jeweiligen Anwendungszweck angepaßte Formen aufweisen.

Vorzugsweise ist der flexible Behälter in gefülltem Zustand quaderförmig oder zylinderförmig und ist aus Gewebebahnen hergestellt, die durch Verschweißen oder Vernähen miteinander verbunden sind.

Ganz besonders bevorzugt ist der zylindrische Teil des flexiblen Behälters aus Gewebebahnen konfektioniert, die wendelförmig verlaufen und durch Verschweißen, Vernähen, Verkleben oder Vulkanisieren miteinander verbunden sind. Diese Ausführungsform ist beispielsweise in der DE-A-1,921,512 beschrieben und zeichnet sich dadurch aus, daß die Verbindungen der Gewebebahnen im gefüllten Zustand praktisch keinen Zugkräften ausgesetzt sind.

Der flexible Behälter kann neben der Verbindung mit der Abführleitung weitere Armaturen aufweisen, wie ein oder mehrere Ventile, beispielsweise Entnahmeventile, Überdruckventile, Entgasungsventile, oder Zudosierventile.

Ferner kann der flexible Behälter Hilfsmittel zu dessen Handhabung aufweisen, beispielsweise Schlaufen und/oder Ringe an der Seite, an der sich die Einlaßöffnung befindet, womit der Behälter an einer Haltevorrichtung befestigt werden kann.

Ferner können an der Mündung mindestens einer Außenseite des flexiblen Behälters Führungselemente angebracht sein, die bei einer Befüllung des flexiblen Behälters dessen Volumenveränderung steuern, sowie als Vorrichtungen und/oder Halterungen dienen, um eine Fixierung bei starkem Wind auf Gebäudeoberflächen zu gestatten.

Der flexible Behälter kann der Abführleitung in beliebiger Form nachgeschaltet werden. Vorzugsweise wird dieser Behälter platzsparend in gefaltetem oder aufgerolltem Zustand nachgeschaltet. Der Behälter kann aber auch in ausgebreiteter Form vorliegen.

Die Art und Weise der Faltung ist für die Schnelligkeit des selbsttätigen Entfaltens von Bedeutung.

Besonders gute Ergebnisse werden mit einer Technik der Faltung erreicht, bei der praktisch alle Falten an der Oberseite des Behälters auftreten und bei der die auf dem Boden aufliegende Unterseite praktisch faltenfrei ist.

Weitere besonders gute Ergebnisse werden erzielt, wenn der flexible Behälter in Form einer Rolle, gegebenenfalls mit eingeschlagenen Seitenenden, vorgelegt wird.

Bevorzugt wird der flexible Behälter in einer kombinierten Faltung und Aufrollen vorgelegt, wobei beim flach ausgelegten Behälter zunächst die Seitenwände eingeschlagen werden und der Behälter anschließend in Richtung der Abführleitung hin aufgerollt wird.

Es hat sich gezeigt, daß das Füllen des flexiblen Behälters extrem schnell geschehen kann und daß praktisch das gesamte Volumen zur Aufnahme der entweichenden festen, flüssigen und/oder gasförmigen Stoffe zur Verfügung steht.

Geringer, beim Falten oder Zusammenrollen entstehender Totraum, kann mit inerten Gasen befüllt werden. Chemikalien zum Abstoppen chemischer Reaktionen oder zum Neutralisieren des pH-Wertes können in dem flexiblen Behälter vorgelegt werden; ferner können Stoffe mit hoher Wärmekapazität, beispielsweise Wasser, vorgelegt werden, um kondensierbare Anteile schnell auszukondensieren.

Ganz besonders bevorzugt wird eine Ausführungsform des erfindungsgemäßen Rückhaltesystems, bei der die Wände des flexiblen Behälters mit einem Gleitund/oder Schmiermittel behandelt sind; dabei handelt es sich vorzugsweise um Mittel, die bei den bei der Befüllung des Behälters auftretenden hohen Temperaturen das Entfalten des Behälters erleichtert.

Als Gleit- und/oder Schmiermittel werden vorzugsweise solche Mittel eingesetzt, die bei höheren Temperaturen funktionsfähig sind, beispielsweise Molybdändisulfid, Glimmer, Graphit oder insbesondere Talkum; oder Silikonöle oder Silikonfette.

In einer weiteren bevorzugten Ausführungsform der Erfindung ist an der Mündung der Abführleitung in den flexiblen Behälter und/oder im flexiblen Behälter mindestens eine Vorrichtung zum Verteilen von Stoffströmen, insbesondere von Flüssigkeiten, angebracht.

Vorzugsweise weist die Abführleitung eine trichterförmige Mündung auf, die den austretenden Stoffstrom möglichst so verteilt, daß kein stark auf einen Punkt konzentrierter Strahl entsteht. Eine weitere bevorzugte Form der Mündung kann auch den Strahl derart zerteilen, daß das Entfalten bzw. Entrollen gezielt unterstützt wird.

Der oder die flexiblen Behälter werden vorzugsweise auf Gebäudedächern plaziert, da die Gewichtsbelastung nicht punktförmig auftritt, sondern über die gesamte Auflagefläche gleichmäßig verteilt ist. Mehrere Anlagen können in einem entsprechend dimensionierten flexiblen Behälter zusammengeführt werden. Ebenso können auch mehrere flexible Behälter zusammengeschaltet werden.

Das erfindungsgemäße Sicherheitssystem kann im im Störfall ohne weitere Vorbereitungen zur Anwendung kommen.

Die Erfindung betrifft daher auch ein Verfahren zur Vermeidung des Austritts von Stoffen aus Anlagen in die Umgebung umfassend die Schritte:
a) Abführen der Stoffe aus der Anlage mittels mindestens einer Abführleitung, die zur Druckentlastung und zum Abführen von Stoffen aus der Anlage dient,
b) Einleiten der Stoffe in mindestens einen flexiblen Behälter, der mit der Abführleitung verbunden ist, wobei der flexible Behälter so gewählt ist, daß dieser mindestens ein solches Innenvolumen in gefülltem Zustand aufweist, daß der Innendruck des verbundenen Systems aus Abführleitung und flexiblem Behälter praktisch dem Außendruck entspricht, und
c) Zwischenlagerung der Stoffe in besagtem flexiblem Behälter, bis zur sachgerechten Entsorgung.

Beim Erreichen eines Ansprechdrucks einer Druckentlastungseinrichtung strömt das aus der Anlage, beispielsweise einem Reaktionskessel, entweichende Material durch die Abführleitung in den oder die flexiblen Behälter, der sich dadurch selbsttätig entfaltet und die ausströmenden Stoffe auffängt. Der kondensierbare Anteil kondensiert dabei aus. Anschließend kann der Behälter samt Inhalt ordnungsgemäß entsorgt werden.

Das folgende Beispiel erläutert die Erfindung ohne diese zu begrenzen.

Ein mit 88,2 Litern Wasser gefüllter Autoklav des Innenvolumens von 105 Liter wird auf 180°C bis zu einem Innendruck von 10 bar erhitzt. Der Autoklav ist über eine mit Sicherheitsventil ausgestattete Abführleitung mit einem flexiblen Behälter aus PVC-beschichtetem Gewebe aus ^{R}TREVIRA HOCHFEST verbunden. Der flexible Behälter weist ein Innenvolumen von 20 m³ auf. Das Sicherheitsventil ist bis zu einem Druck von 10 bar ausgelegt. Nach Erreichen des Ansprechdruckes wird der Autoklavinhalt über die Abführleitung in den flexiblen Behälter abgeblasen, wobei sich der Behälter selbsttätig entfaltet. Der Verlauf bei der Druckentlastung bzw. bei der Temperatur des Wassers im verbundenen Systems aus Autoklav, Abführleitung und Behälter (gemessen im Autoklav) ist in der folgenden Tabelle dargestellt:

**Tabelle**

| | | | | | | | | | |
|---|---|---|---|---|---|---|---|---|---|
| Entlastungszeit (Sek.): | 2 | 4 | 6 | 8 | 10 | 14 | 18 | 22 | 26 |
| Druck im System (bar): | 9 | 7,5 | 6 | 5,2 | 4,2 | 3 | 2,5 | 1,8 | 1,1 |
| Wassertemperatur (°C): | 178 | 175 | 170 | 160 | 150 | 140 | 120 | 115 | 110 |
| Temperatur im flexiblen Behälter (°C) | 100 | 100 | 100 | 100 | 100 | 100 | 100 | 100 | 100 |

## Patentansprüche

1. Rückhaltesystem zum Auffangen von Stoffen aus einem Apparat, dessen Innendruck mindestens 0,5 bar über dem Außendruck liegt, der mindestens eine in mindestens einen flexiblen Behälter mündende und mit diesem verbundene Abführleitung aufweist sowie eine Druckentlastungssicherung, wobei Druckentlastungssicherung, Abführleitung und der mindestens eine flexible Behälter so angeordnet sind, daß bei Ansprechen der Druckentlastungssicherung aus dem Apparat austretende Stoffe in den mindestens einen flexiblen Behälter gelangen, wobei der mindestens eine flexible Behälter mindestens so dimensioniert ist, daß sein Innenvolumen die aus dem Apparat ausgetretene Stoffmenge vollständig aufnehmen kann, ohne daß dadurch ein Innendruck entsteht, der mehr als 3 bar über dem Außendruck liegt, und wobei an der Mündung der Abführleitung in den mindestens einen flexiblen Behälter und/oder in dem mindestens einen flexiblen Behälter eine Vorrichtung zum Verteilen der Stoffströme angeordnet ist.

2. Rückhaltesystem nach Anspruch 1, dadurch gekennzeichnet, daß der flexible Behälter aus einem beschichteten oder unbeschichteten Gewebe besteht.

3. Rückhaltesystem nach Anspruch 2, dadurch gekennzeichnet, daß das Gewebe aus Polyesterfasern, insbesondere aus Polyethylenterephthalatfasern, besteht.

4. Rückhaltesystem nach Anspruch 2, dadurch gekennzeichnet, daß der flexible Behälter in gefülltem Zustand quaderförmig ist und aus Gewebebahnen hergestellt ist, die durch Verschweißen oder Vernähen miteinander verbunden sind.

5. Rückhaltesystem nach Anspruch 2, dadurch gekennzeichnet, daß der flexible Behälter in gefülltem Zustand zylinderförmig ist und aus Gewebebahnen hergestellt ist, die durch Verschweißen oder Vernähen miteinander verbunden sind.

6. Rückhaltesystem nach Anspruch 5, dadurch gekennzeichnet, daß der zylindrische Teil des flexiblen Behälters aus Gewebebahnen konfektioniert ist, die wendelförmig verlaufen und durch Verschweißen oder Vernähen miteinander verbunden sind.

7. Rückhaltesystem nach Anspruch 2, dadurch gekennzeichnet, daß das Gewebe zur Verbesserung der Undurchlässigkeit des flexiblen Behälters für die aufzunehmenden Stoffe mit thermoplastischen Kunststoffen oder mit Elastomeren beschichtet ist.

8. Rückhaltesystem nach Anspruch 1, dadurch gekennzeichnet, daß der flexible Behälter mit mindestens einer Einlaßöffnung ausgestattet ist, die an die Mündung der Abführleitung anflanschbar ist oder mit einem Flansch verbunden werden kann.

9. Rückhaltesystem nach Anspruch 1, dadurch gekennzeichnet, daß der flexible Behälter neben einer Einlaßöffnung weitere Armaturen aufweist, insbesondere ein oder mehrere Ventile.

10. Rückhaltesystem nach Anspruch 1, dadurch gekennzeichnet, daß an der Mündung mindestens einer Außenseite des flexiblen Behälters Führungselemente angebracht sind.

11. Rückhaltesystem nach Anspruch 1, dadurch gekennzeichnet, daß der flexible Behälter an der Seite, an der sich die Einlaßöffnung befindet Schlaufen und/oder Ringe aufweist, womit der Behälter an einer Haltevorrichtung befestigt werden kann.

12. Rückhaltesystem nach Anspruch 1, dadurch gekennzeichnet, daß der flexible Behälter vor dem Auffangen der Stoffe in aufgefalteter und/oder aufgerollter Form vorliegt.

13. Rückhaltesystem nach Anspruch 2, dadurch gekennzeichnet, daß die Wände des flexiblen Behälters mit einem Gleit- und/oder Schmiermittel, vorzugsweise mit Talkum, behandelt sind.

14. Rückhaltesystem nach mindestens einem der Ansprüche 1 bis 13, dadurch gekennzeichnet, daß der mindestens eine flexible Behälter vor dem Ansprechen der Druckentlastungssicherung so gefaltet ist, daß praktisch alle Falten an der Oberseite des Behälters auftreten und die Unterseite praktisch faltenfrei ist.

## Claims

1. A retention system for collecting substances from an apparatus whose internal pressure is at least 0.5 bar above the external pressure and which has at least one outlet line which opens out into at least one flexible container and is joined to this and also a pressure-relief safety device, with the pressure-relief safety device, the outlet line and the flexible container or containers being arranged such that, when the pressure-relief safety device is activated, substances exiting the apparatus pass into the flexible container or containers, with the flexible container or containers being dimensioned at least so that its internal volume can completely absorb the amount of substance exiting the apparatus, without producing an internal pressure which is more than 3 bar above the external pressure, and a device for distributing the mass streams being arranged at the orifice of the outlet line into the flexible container or containers and/or in the flexible container or containers.

2. The retention system as claimed in claim 1, wherein the flexible container is composed of a coated or uncoated fabric.

3. The retention system as claimed in claim 2, wherein the fabric is composed of polyester fibers, in particular of polyethylene terephthalate fibers.

4. The retention system as claimed in claim 2, wherein the flexible container is cuboid in the filled state and is produced from fabric webs which are joined together by welding or sewing.

5. The retention system as claimed in claim 2, wherein the flexible container is cylindrical in the filled state and is produced from fabric webs which are joined together by welding or sewing.

6. The retention system as claimed in claim 5, wherein the cylindrical part of the flexible container is fabricated from fabric webs which run spirally and are joined together by welding or sewing.

7. The retention system as claimed in claim 2, wherein the fabric, to improve the impermeability of the flexible container for the substances to be received, is coated with thermoplastic materials or with elastomers.

8. The retention system as claimed in claim 1, wherein the flexible container is equipped with at least one inlet port which can be flanged to the orifice of the outlet line or can be joined to a flange.

9. The retention system as claimed in claim 1, wherein the flexible container, in addition to an inlet port, has other fittings, in particular one or more valves.

10. The retention system as claimed in claim 1, wherein guide elements are mounted at the orifice of at least one outer side of the flexible container.

11. The retention system as claimed in claim 1, wherein the flexible container, on the side on which the inlet port is situated, has loops and/or rings by which the container can be fixed to a holder.

12. The retention system as claimed in claim 1, wherein the flexible container, before collecting the substances, is present in a folded-up and/or rolled-up form.

13. The retention system as claimed in claim 2, wherein the walls of the flexible container are treated with a slip additive and/or lubricant, preferably with talcum.

14. The retention system as claimed in at least one of claims 1 to 13, wherein the container or containers is folded, before the pressure-relief safety device is activated, such that virtually all pleats occur at the top side of the container and the bottom side is virtually pleat-free.

## Revendications

1. Système de retenue pour le captage de produits sortant d'un appareil, dont la pression intérieure est au moins de 0,5 bar au-dessus de la pression extérieure, qui présente au moins une canalisation d'extraction débouchant dans au moins un récipient flexible et connectée à celui-ci, ainsi qu'une sécurité de détente de la pression, dans lequel la sécurité de détente de la pression, la canalisation d'extraction et le récipient comptant au moins une unité flexible sont aménagés de telle sorte que, lors du déclenchement de la sécurité de détente de pression, les produits s'écoulant par débordement de l'appareil arrivent dans le récipient comptant au moins une unité flexible, dans lequel le récipient comptant au moins une unité flexible est au moins dimensionné de telle sorte que son volume intérieur puisse absorber complètement la quantité de produits s'écoulant par débordement de l'appareil, sans qu'il en résulte une pression intérieure, qui soit de plus de 3 bar au-dessus de la pression extérieure, et dans lequel est aménagé à l'embouchure de la canalisation d'extraction dans les récipients dont au moins un est flexible et/ou dans le récipient comptant au moins une unité flexible, un dispositif pour la répartition des courants de matières.

2. Système de retenue selon la revendication 1, caractérisé en ce que le récipient flexible est constitué d'un tissu enduit ou non enduit.

3. Système de retenue selon la revendication 2, caractérisé en ce que le tissu est constitué de fibres de polyester, en particulier de fibres de polytéréphtalate d'éthylène.

4. Système de retenue selon la revendication 2, caractérisé en ce que le récipient flexible a une forme carrée à l'état rempli et en ce qu'il est fabriqué à partir de bandes de tissu, qui sont liées entre elles par soudage ou couture.

5. Système de retenue selon la revendication 2, caractérisé en ce que le récipient flexible a une forme cylindrique à l'état rempli et en ce qu'il est fabriqué à partir de bandes de tissu, qui sont liées entre elles par soudage ou couture.

6. Système de retenue selon la revendication 5, caractérisé en ce que la partie cylindrique du récipient flexible est confectionnée avec des bandes de tissu, qui se développent en spirale et sont liées entre elles par soudage ou couture.

7. Système de retenue selon la revendication 2, caractérisé en ce que le tissu du récipient flexible destiné à absorber des produits, est enduit de matières thermoplastiques ou d'élastomères pour améliorer son imperméabilité.

8. Système de retenue selon la revendication 1, caractérisé en ce que le récipient flexible est équipé d'au moins un orifice d'admission, qui peut être bridé à l'embouchure de la canalisation d'extraction ou être connecté avec une bride.

9. Système de retenue selon la revendication 1, caractérisé en ce que le récipient flexible présente en plus d'un orifice d'admission d'autres accessoires, en particulier une ou plusieurs vannes.

10. Système de retenue selon la revendication 1, caractérisé en ce qu'à l'embouchure d'au moins un côté extérieur du récipient flexible, sont installés des éléments de guidage.

11. Système de retenue selon la revendication 1, caractérisé en ce le récipient flexible présente, sur le côté où se trouve l'orifice d'admission, des crochets et/ou des anneaux, au moyen desquels le récipient peut être fixé à un dispositif de fixation.

12. Système de retenue selon la revendication 1, caractérisé en ce le récipient flexible se présente, avant l'absorption des produits, sous une forme pliée et/ou enroulée.

13. Système de retenue selon la revendication 2, caractérisé en ce les parois du récipient flexible sont traitées avec un agent de glissement et/ou de lubrification, de préférence avec du talc.

14. Système de retenue selon au moins une des revendications 1 à 13, caractérisé en ce que le récipient comptant au moins une unité flexible est plié avant le déclenchement de la sécurité de détente de pression de telle sorte que pratiquement tous les plis se trouvent sur la partie supérieure du récipient et en ce que la partie inférieure est pratiquement sans pli.
